# EUROPEAN PATENT APPLICATION

(11) **EP 2 309 818 A1**
(43) Date of publication of application: **13.04.2011**
(21) Application number: 10013383.4
(22) Date of filing: 06.10.2010
(51) Int. Cl.: H04W 76/02

(54) **Method and apparatus for handling radio link failure in wireless communication system**

(30) Priority: 07.10.2009 US 249262 P
(71) Applicant: Innovative Sonic Corporation, Taipei City (TW)
(72) Inventor: Kuo, Richard Lee-Chee, Peitou Taipei City (TW)
(74) Representative: Hager, Thomas Johannes

(57) **Abstract**

A method for handling RLF in a UE of a wireless communication system is disclosed. The wireless communication system supports Carrier Aggregation, which enables the UE to perform data transmission and/or reception through multiple carriers. The method includes steps of the UE being allocated with a plurality of serving cells, wherein only one of the plurality of serving cells provides resources of an RACH and a PUCCH (402), and declaring occurrence of RLF when the serving cell which provides resources of the random access channel and the physical uplink control channel fails (404).

## Description

The present invention relates to a method and apparatus for handling radio link failure (RLF) in a wireless communication system according to the pre-characterizing clauses of claims 1 and 2.

Long Term Evolution wireless communication system (LTE system), an advanced high-speed wireless communication system established upon the 3G mobile telecommunication system, supports only packet-switched transmission, and tends to implement both Medium Access Control (MAC) layer and Radio Link Control (RLC) layer in one single communication site, such as in base stations (Node Bs) alone rather than in Node Bs and RNC (Radio Network Controller) respectively, so that the system structure becomes simple.

In LTE system, a network terminal and a user equipment (UE) perform data transmission through a cell which provides services, i.e. a serving cell. The serving cell includes an uplink carrier and a downlink carrier, and is allocated to the UE when the UE establishes a radio resource control (RRC) connection with the network terminal. Moreover, in order to maintain an effective connection between the UE and the network terminal after the connection is established, the UE detects whether there is a physical layer problem with the serving cell. If the UE detects a physical layer problem, e.g. the UE detects consecutive "out-of-sync" indications from a physical layer, the UE triggers a timer T310. Afterwards, if the UE detects consecutive "in-sync" indications from the physical layer, the UE considers the physical layer problem has been recovered and stops the timer T310. If the physical layer problem has not been recovered before the timer T310 expires, the UE declares occurrence of a radio link failure (RLF), and initiates a connection re-establishment procedure, to re-establish a normal connection with the network terminal.

However, to meet future requirements of all kinds of communication services, the 3rd Generation Partnership Project (3GPP) has started to work out a next generation of the LTE system: the LTE Advanced (LTE-A) system. Carrier aggregation (CA), for which two or more component carriers are aggregated, is introduced into the LTE-A system in order to support wider transmission bandwidth, e.g. up to 100MHz and for spectrum aggregation. In other words, in the LTE-A system, a UE utilizes multiple subcarriers for data transmission with a network terminal, so as to enhance transmission bandwidth and spectrum efficiency.

As can be seen from the above, after CA is introduced, the network terminal can further allocate at least one serving cell to the UE via an RRC connection re-configuration procedure, such that the UE can simultaneously utilize multiple subcarriers for data transmission. Since the UE can simultaneously utilize multiple serving cells, and each of the serving cells may have a different coverage range or radio quality. Thus, a physical layer problem with one serving cell does not mean other serving cells are also useless, i.e. other serving cells may still work. In such a situation, if the UE can still perform data transmission/reception via any normal serving cell, then the UE does not have to perform the connection re-establishment procedure due to a physical layer problem with a certain serving cell. Therefore, the UE tends to determine occurrence of RLF according to statuses of all serving cells rather than failure of a single serving cell in the prior art. As a result, when a serving cell fails, the network terminal can still communicate with the UE through other serving cells, e.g. sending a handover instruction for the UE to switch serving cells.

Besides, when the UE intends to perform uplink transmission, the UE needs to acquire uplink grant via a random access procedure or a scheduling request procedure. Correspondingly, the network terminal needs to provide resources of a random access channel (RACH) and a physical uplink control channel (PUCCH) for the random access procedure and the scheduling request procedure through a serving cell, respectively. After CA is introduced, the network terminal can perform data transmission with the UE through multiple serving cells. Therefore, for simplifying system design, we think it should be sufficient for the network terminal to provide resources of RACH and PUCCH through a single serving cell to meet the above requirements. In such a situation, if the above RLF determination scheme is applied, i.e. determining occurrence of RLF according to statuses of all the serving cells rather than failure of a single serving cell, when the serving cell which provides resources of RACH and PUCCH fails, while other serving cells still have good radio quality, the UE cannot promptly acquire uplink grant to perform a new transmission, which significantly affects transmission efficiency.

Thus, after CA is allocated, if the serving cell which provides resources of RACH and PUCCH fails, transmission efficiency between the network terminal and the UE is significantly affected. In such a situation, there is a need for an improvement.

This in mind, the present invention aims at providing a method and apparatus capable of effectively declaring occurrence of RLF, to timely initiate a radio resource control connection re-establishment procedure.

This is achieved by a method and apparatus for handling radio link failure (RLF) in a user equipment (UE) of a wireless communication system according to the pre-characterizing clauses of claims 1 and 2. The dependent claims pertain to corresponding further developments and improvements.

As will be seen more clearly from the detailed description following below, the claimed method for handling radio link failure (RLF) in a user equipment (UE) of a wireless communication system. The wireless communication system supports Carrier Aggregation, which enables the UE to perform data transmission and/or reception through multiple carriers. The method includes steps of being allocated with a plurality of serving cells, wherein only one of the plurality of serving cells provides resources of a random access channel (RACH) and a physical uplink control channel (PUCCH), and declaring occurrence of RLF when the serving cell which provides resources of the RACH and the PUCCH fails.

In the following, the invention is further illustrated by way of example, taking reference to the accompanying drawings. Thereof
FIG 1 is a schematic diagram of a wireless communications system.
FIG.2 is a function block diagram of a wireless communications device.
FIG.3 is a diagram of a program of FIG.2.
FIG.4 is a flowchart of a process according to an embodiment of the present invention.

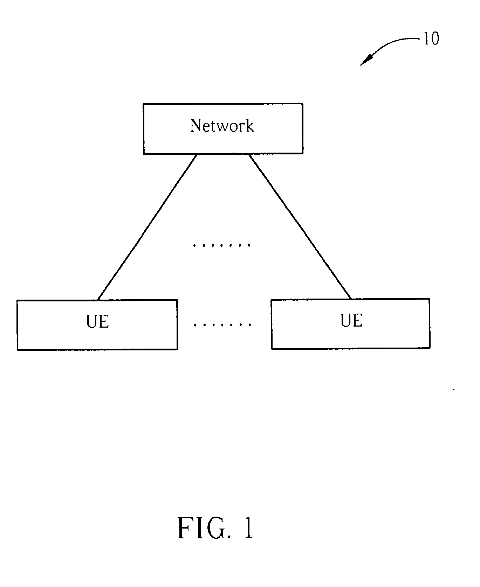

Please refer to FIG.1, which illustrates a schematic diagram of a wireless communication system 10. The wireless communication system 10 is preferably an LTE advanced (LTE-A) system, and is briefly composed of a network terminal and a plurality of user equipments (UEs). In FIG.1, the network terminal and the UEs are simply utilized for illustrating the structure of the wireless communication system 10. Practically, the network may comprise a plurality of base stations (Node Bs), radio network controllers and so on according to actual demands, and the UEs can be devices such as mobile phones, computer systems, etc.

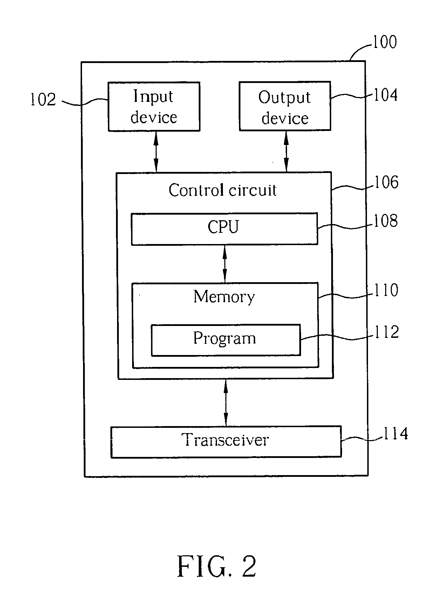

Please refer to FIG.2, which is a functional block diagram of a communication device 100 in a wireless communication system. The communication device 100 can be utilized for realizing the UEs in FIG.1. For the sake of brevity, FIG.2 only shows an input device 102, an output device 104, a control circuit 106, a central processing unit (CPU) 108, a memory 110, a program 112, and a transceiver 114 of the communication device 100. In the communication device 100, the control circuit 106 executes the program 112 in the memory 110 through the CPU 108, thereby controlling an operation of the communication device 100. The communication device 100 can receive signals input by a user through the input device 102, such as a keyboard, and can output images and sounds through the output device 104, such as a monitor or speakers. The transceiver 114 is used to receive and transmit wireless signals, deliver received signals to the control circuit 106, and output signals generated by the control circuit 106 wirelessly. From a perspective of a communication protocol framework, the transceiver 114 can be seen as a portion of Layer 1, and the control circuit 106 can be utilized to realize functions of Layer 2 and Layer 3.

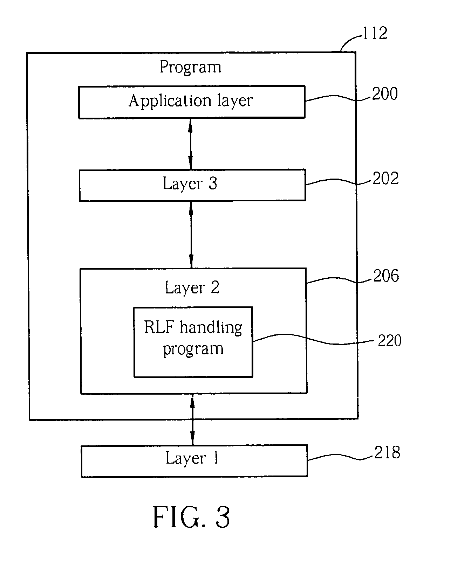

Please continue to refer to FIG.3. FIG.3 is a diagram of the program 112 shown in FIG.2. The program 112 includes an application layer 200, a Layer 3 202, and a Layer 2 206, and is coupled to a Layer 1 218. The Layer 3 202 performs radio resource control. The Layer 2 206 comprises a Radio Link Control (RLC) layer and a Medium Access Control (MAC) layer, and performs link control. The Layer 1 218 performs physical connections.

In LTE-A system, the Layer 1 218 and the Layer 2 206 may support a Carrier Aggregation (CA) technology, which enables the UE to perform data transmission and/or reception through multiple carriers. In such a situation, in order to effectively determine occurrence of RLF, the embodiment of the present invention provides an RLF handling program 220 in the Layer 2 206 to declare occurrence of RLF, so as to timely initiate an RRC connection re-establishment procedure.

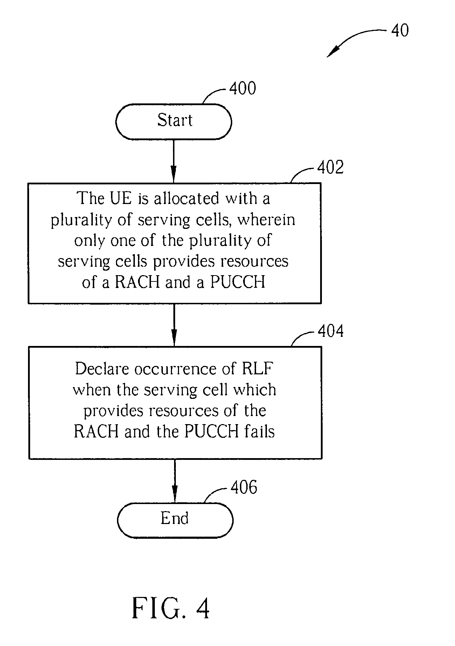

Please refer to FIG.4, which illustrates a schematic diagram of a process 40. The process 40 is utilized for handling RLF in a UE of the wireless communication system 10, and can be compiled into the RLF handling program 220. The process 40 includes the following steps:
Step 400: Start.
Step 402: The UE is allocated with a plurality of serving cells, wherein only one of the plurality of serving cells provides resources of a random access channel (RACH) and a physical uplink control channel (PUCCH).
Step 404: Declare occurrence of RLF when the serving cell which provides resources of the RACH and the PUCCH fails.
Step 406: End.

When the UE establishes an RRC connection with a network terminal, the network terminal allocates a serving cell to the UE, and when data to be transmitted increases, the network terminal can further allocate at least one serving cell to the UE via an RRC connection re-configuration procedure, such that the UE can simultaneously utilize multiple subcarriers for data transmission. As can be seen from the process 40, the network terminal only provides resources of a RACH and a PUCCH on one of the allocated serving cells. Moreover, when the serving cell fails, the UE declares occurrence of RLF. In short, after the UE is allocated with a plurality of serving cells, even if other serving cells still have good radio quality, once the serving cell which provides resources of the RACH and the PUCCH fails, the UE declares occurrence of RLF, so as to promptly initiate an RRC connection re-establishment procedure, which triggers the network terminal to allocate new resources of RACH and PUCCH and thus ensure the UE can trigger a random access procedure or a scheduling request procedure after the RRC connection re-establishment procedure.

In the process 40, the way for determining whether the serving cell which provides resources of the RACH and the PUCCH fails can be the same as those in the prior art. In other words, when the Layer 1 218 indicates a plurality, e.g. N310, of consecutive out-of-sync indications on the serving cell, the UE triggers a timer T310. If the physical layer problem with the serving cell has not been recovered before the timer T310 expires, the UE declares failure of the serving cell. On the contrary, if a plurality, e.g. N311, of consecutive in-sync indications on the serving cell are detected, which means the physical layer problem with the serving cell has been recovered, before the timer T310 expires, the UE stops the timer T310.

In the prior art, after CA is allocated, if the UE declares occurrence of RLF according to statuses of all serving cells rather than failure of a single serving cell, the UE cannot promptly acquire uplink grant to perform a new uplink transmission when the serving cell which provides resources of the RACH and the PUCCH fails. In comparison, according to the embodiment of the present invention, when the serving cell which provides resources of the RACH and the PUCCH fails, the UE declares occurrence of RLF, and thus initiates an RRC connection re-establishment procedure, which triggers the network terminal to allocate new resources of RACH and PUCCH to ensure transmission efficiency with the network terminal.

To sum up, the present invention can effectively declare occurrence of RLF, to timely initiate an RRC connection re-establishment procedure, so as to ensure transmission efficiency with the network terminal.

## Claims

1. A method for handling radio link failure, named RLF hereinafter, in a user equipment, named UE hereinafter, of a wireless communication system, the wireless communication system supporting Carrier Aggregation, which enables the UE to perform data transmission and/or reception through multiple carriers, comprising:
the UE being allocated with a plurality of serving cells, wherein only one of the plurality of serving cells provides resources of a random access channel , named RACH hereinafter, and a physical uplink control channel, named PUCCH hereinafter, (402); and
**characterized by** declaring occurrence of RLF when the serving cell which provides resources of the RACH and the PUCCH fails (404).

2. A communication device (100) for handling RLF in a UE of a wireless communication system, the wireless communication system supporting Carrier Aggregation, which enables the UE to perform data transmission and/or reception through multiple carriers, comprising:
a processor (108) for executing a program (112); and
a memory (110) coupled to the processor (108) for storing the program (112);
wherein the program (112) comprises:
the UE being allocated with a plurality of serving cells, wherein only one of the plurality of serving cells provides resources of an RACH and a PUCCH (402); and
**characterized by** declaring occurrence of RLF when the serving cell which provides resources of the RACH and the PUCCH fails (404).

3. The method of claim 1 or the communication device (100) of claim 2, **characterized in that** the method of claim 1 or the program (112) of claim 2 further comprises triggering a radio resource control connection re-establishment procedure.

4. The method of claim 1 or the communication device (100) of claim 2, **characterized in that** the PUCCH is utilized for a scheduling request Procedure.

5. The method of claim 1 or the communication device (100) of claim 2, **characterized in that** one of the plurality of serving cells is allocated during a radio resource control, named RRC hereinafter, connection establishment procedure, and other serving cells are allocated via an RRC connection re-configuration procedure.

6. The method of claim 1 or the communication device (100) of claim 2, **characterized in that** the serving cell is declared as failed when a timer expires.

7. The method or the communication device (100) of claim 6, **characterized in that** the timer is started upon detecting a plurality of consecutive out-of-sync indications on the serving cell.

8. The method or the communication device (100) of claim 7, **characterized in that** the timer is stopped upon detecting a plurality of consecutive in-sync indications on the serving cells.

9. The method or the communication device (100) of claim 6, **characterized in that** the timer is T310.
